Europäisches Patentamt

European Patent Office

Office européen des brevets

(19)

(11) Numéro de publication : **0 277 877 B1**

(12) **FASCICULE DE BREVET EUROPEEN**

(45) Date de publication du fascicule du brevet :
27.11.91 Bulletin 91/48

(51) Int. Cl.⁵ : **G01P 5/20, G01P 5/00**

(21) Numéro de dépôt : **88400211.4**

(22) Date de dépôt : **29.01.88**

(54) **Vélocimètre à mosaiques de fibres optiques.**

(30) Priorité : **30.01.87 FR 8701150**

(43) Date de publication de la demande :
**10.08.88 Bulletin 88/32**

(45) Mention de la délivrance du brevet :
**27.11.91 Bulletin 91/48**

(84) Etats contractants désignés :
**DE GB**

(56) Documents cités :
EP-A- 0 009 533
DE-A- 3 009 383
US-A- 3 552 855
PATENT ABSTRACTS OF JAPAN, vol. 4, no.
31, 18 mars 1980, page 72 P 2; & JP-A-55 4575
(NOBORU NAKATANI) 14-01-1980
Idem
Idem

(56) Documents cités :
REVIEW OF SCIENTIFIC INSTRUMENTS, vol.
45, no. 2, février 1974, pages 210-215, American Institute of Physics, New York, US; B.T.
YANG et al.: "A portable laser light-scattering
probe for turbulent diffusion studies"

(73) Titulaire : **OFFICE NATIONAL D'ETUDES ET
DE RECHERCHES
AEROSPATIALES(O.N.E.R.A.)**
Etablissement Public de l'Etat 29 avenue de la
Divison Leclerc
F-92320 Châtillon (FR)

(72) Inventeur : **Boutier, Alain**
6, Place de la Poste
F-91440 Bures (FR)
Inventeur : **Lefevre, Jean**
20, rue Jean Jaurès
F-92260 Fontenay-aux-Roses (FR)

(74) Mandataire : **Cabinet Martinet & Lapoux**
BP 405
F-78055 Saint Quentin en Yvelines Cédex (FR)

## Description

La présente invention concerne un dispositif de vélocimétrie reposant sur la diffusion de la lumière par les particules traversant un petit volume de mesure formé dans un écoulement de fluide liquide ou gazeux et fortement éclairé et plus particulièrement un vélocimètre utilisant une mosaïque de fibres optiques, également appelée faisceau.

Des vélocimètres laser comprenant les éléments énoncés dans le préambule de la revendication 1 sont connus par le PATENT ABSTRACTS OF JAPAN, Vol. 4, n° 31, 18 mars 1980, page 72P2 ; & JP-A-554575 (NOBORU NAKATANI) et le US-A-3552855. Ces vélocimètres sont du type à effet Doppler optique.

Selon le premier document précité, la lumière diffusée par les particules illuminées par un unique faisceau laser incident traverse une lentille de projection au foyer de laquelle un masque partage la lumière diffusée en deux faisceaux diffusés suivant deux directions d'observation différentes. Les faisceaux diffusés interfèrent à des extrémités d'entrée des fiches optiques de la mosaïque situées au plan image de la lentille. Chaque fibre est couplée à un photodétecteur respectif qui délivre une impulsion de laquelle est déduite une composante de vitesse au point de mesure.

Selon le second document précité, deux mosaïques de fibres optiques reçoivent, par l'intermédiaire de lentilles de focalisation respectives, un premier faisceau de lumière rétrodiffusée par les particules, et un second faisceau qui peut être une partie du faisceau incident laser traversant un séparateur optique situé entre le laser et le volume de mesure, ou qui peut être un autre faisceau de lumière rétrodiffusée suivant une direction différente du premier faisceau rétrodiffusé. Les deux faisceaux en sortie des deux mosaïques de fibre interfèrent sur la face d'entrée cathodique d'un tube photodétecteur de moyens de détection de fréquences.

Dans tous ces vélocimètres laser du type Doppler, une seule composante de la vitesse est mesurée en fonction de la différence des fréquences des deux faisceaux diffusés, ou incident et diffusé, et des directions des faisceaux, les fréquences étant décalées par effet Doppler pour les faisceaux diffusés.

D'autres types de vélocimètres dit à laser à franges comprennent au moins deux sources incidentes suivant deux directions différentes qui interfèrent dans le volume de mesure. Avec de tels vélocimètres, deux ou trois composantes de la vitesse des particules peuvent être mesurées. Toutefois, ces vélocimètres ne sont pas capables d'effectuer des mesures à moins d'une dizaine de millimètres d'une paroi que les faisceaux heurtent normalement.

La présente invention vise à fournir un vélocimètre de structure optique moins complexe que celle des vélocimètres connus, c'est-à-dire ne comportant qu'un faisceau lumineux incident et qu'un faisceau lumineux diffusé, pour mesurer simultanément deux composantes de la vitesse. Un vélocimètre selon l'invention ne fait donc pas appel à la notion d'interférence.

A cette fin, un vélocimètre selon l'invention est tel que défini dans la revendication 1. L'unique mosaïque de fibres optiques, conjuguée au volume de mesure, donne accès à deux composantes simultanées du vecteur vitesse en un point de mesure.

Avantageusement, comme on le verra dans la suite et comme protégé dans la revendication 2 ou 3, chaque groupe de photomultiplicateurs, par exemple associé à une ligne ou une colonne de matrice lorsque les extrémités d'entrée des fibres optiques sont réparties en une matrice, ou chaque photomultiplicateur couplé à une seule fibre optique ne considère qu'une petite portion du volume de mesure et donc contribue à diminuer le rapport signal sur bruit dans la mesure. Comparativement à cela, chacun des photodétecteurs selon les deux documents précités considère tout le volume de mesure pour la mesure d'une unique composante de vitesse.

Selon l'invention, l'emploi d'une autre mosaïque de fibres optiques captant de la lumière diffusée par les particules selon une autre direction permet de constituer un vélocimètre pour mesurer trois composantes de la vitesse d'un écoulement et donc l'orientation complète et le module de cette vitesse. Un tel vélocimètre est défini dans la revendication 4. Il est à noter que, dans ce vélocimètre, aucune interférence des faisceaux lumineux à l'une des extrémités des fibres optiques des deux mosaïques n'est prévue.

D'autres caractéristiques du vélocimètre particulièrement destiné à mesurer la vitesse d'un écoulement fluide, parfois fort turbulent, dans un conduit d'entrée d'air sont énoncées dans les revendications 5 et 6.

L'invention va être maintenant décrite en détail en relation avec les dessins annexés dans lesquels :

— la Fig. 1 représente un vélocimètre conforme à l'invention avec une mosaïque de fibres optiques ;

— la Fig. 2 représente un vélocimètre conforme à l'invention avec deux mosaïques de fibres optiques ;

— la Fig. 3 représente le plan des entrées des fibres optiques constituant la mosaïque ;

— la Fig. 4 représente les photomultiplicateurs couplés aux fibres optiques ;

— la Fig. 5 représente le système de traitement du signal du vélocimètre par additions de signaux électroniques ;

— les Figs. 6 et 7 représentent le système de traitement du signal du vélocimètre par addition de signaux optiques et électroniques ;

— la Fig. 8 représente une mosaïque de fibres optiques avec fibre de start et fibres de stop ; et

— les figs. 9, 10 et 11 représentent respectivement un vélocimètre conforme à l'invention implanté dans une entrée d'air et les têtes d'émission et de réception de ce vélocimètre.

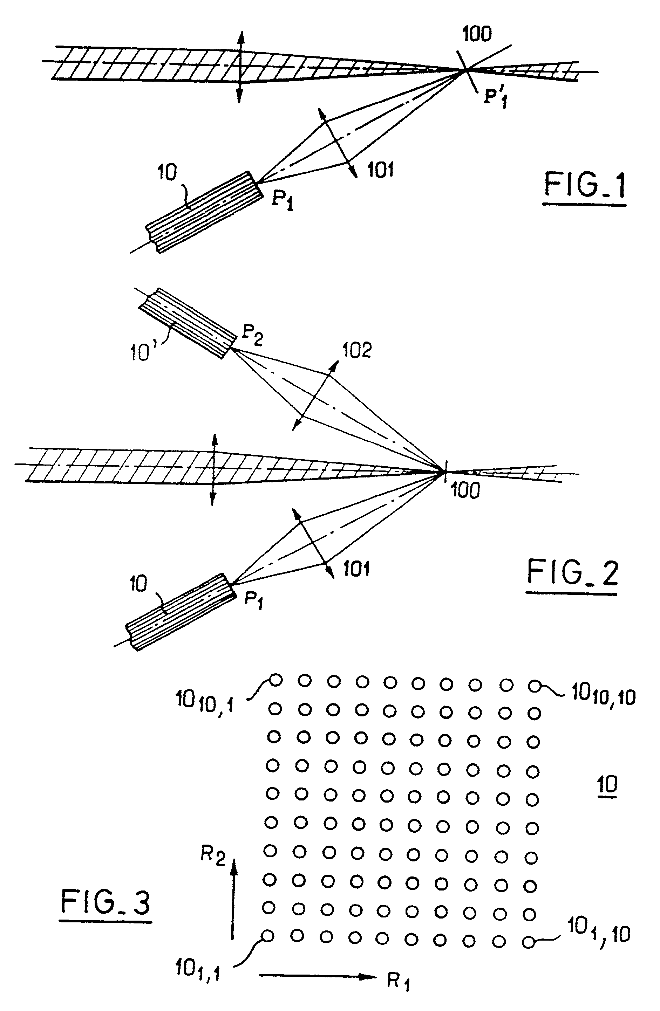

En se référant aux Figs. 1 et 2, la lumière diffusée par les particules traversant le volume de mesure 100 fortement éclairé est recueillie par un système optique de réception 101 la focalisant sur une mosaïque 10 de 100 fibres optiques. Le plan d'entrée $P_1$ de cette mosaïque de fibres optiques est conjugué d'un plan $P'_1$ dans le volume de mesure. Cette mosaïque, qui assure un codage spatial après réception de la lumière diffusée, détecte donc la projection du vecteur vitesse $V^{\rightarrow}$ de l'écoulement dans le plan $P'_1$, ce qui donne accès à la mesure simultanée de deux composantes de la vitesse $R_1$ et $R_2$. Ceci constitue un vélocimètre bidimensionnel. A titre d'exemple, l'optique 101 ayant un grandissement de 10, le volume de mesure 100 ayant un diamètre de 300 μm, chaque fibre à gradient d'indice a un diamètre de 220 μm et un coeur de 200 μm, ce qui montre que les espaces morts entre fibres sont très réduits. En ajoutant (Fig. 2) un second système optique de réception 102 visant le volume de mesure 100 selon une direction différente, on mesure deux autres composantes $R_3$ et $R_4$ (on peut bien sûr faire en sorte que $R_4$ et $R_2$ par exemple soient des composantes verticales créant ainsi une redondance de mesure) : on a ainsi créé un vélocimètre tridimensionnel.

En fait, les distances sont ici dans le plan image du système optique de réception au lieu d'être au niveau du volume de mesure comme dans les vélocimètres à franges, à deux points, deux traits, deux croix. Le système optique de réception 101 doit être de très bonne qualité (limité par la diffraction) pour que l'image d'une particule soit dans le plan $P_1$ bien inférieure au diamètre de chaque fibre.

Les extrémités d'entrées des fibres peuvent être rangées sous forme d'une mosaïque matricielle représentée sur la Fig. 3, mais des variantes sont possibles comme, par exemple, une géométrie formée à partir de la Fig. 3, en décalant une ligne sur deux (ou une colonne sur deux) d'une quantité égale au demi-pas des fibres, de manière à supprimer les espaces vides, inter-lignes et inter-colonnes. Les lignes et colonnes définissent ainsi respectivement des directions de première et seconde coordonnées de vecteur-vitesse.

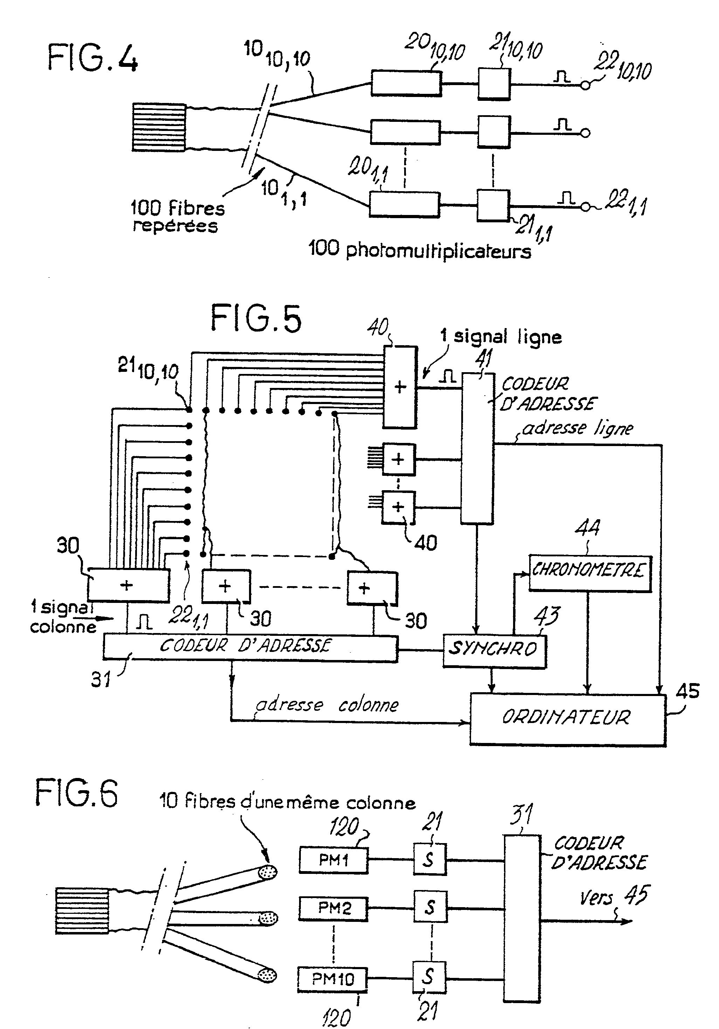

Chaque fibre $10_{1,1}$ à $10_{10,10}$ qui peut avoir une longueur de plusieurs mètres est reliée à un photomultiplicateur, respectivement $20_{1,1}$ à $20_{10,10}$ (Fig. 4). A chaque mosaïque de fibres optiques (précédée ou non par une mosaïque de microlentilles) est donc associée une batterie de photomultiplicateurs.

Lorsqu'une particule traverse le volume de mesure 100, les photomultiplicateurs 20 concernés (reliés aux fibres s'étant trouvées dans le plan $P_1$ sur la projection de la trajectoire de la particule) délivrent des impulsions électriques, qui par traitement électronique approprié permettent de déduire le vecteur vitesse instantanée dans le plan $P'_1$. Lorque l'on dispose de deux systèmes optiques de réception, comme dans le cas de la Fig. 2, le vélocimètre laser à mosaïque de fibres optiques donne ainsi accès au module et à l'orientation dans l'espace du vecteur vitesse instantané de chaque particule.

L'avantage spécifique de ce type de vélocimètre au point de vue rapport signal sur bruit réside en ce que chaque détecteur, par l'intermédiaire de chaque fibre optique, ne perçoit qu'une faible partie du volume de mesure (et donc dans la même proportion, du feu lumineux renvoyé par une paroi proche), ce qui diminue considérablement le niveau de bruit. Cette propriété est particulièrement intéressante car la limitation fondamentale de la vélocimétrie laser lors de mesures près des parois provient de la saturation des photomultiplicateurs par le fond continu dû à la lumière parasite ; par contre quand une particule traverse le volume de mesure 100 le signal est tout à fait équivalent à celui d'un vélocimètre à franges, car typiquement l'image de la mosaïque dans le plan P' (à l'intérieur du volume 100) a la dimension d'un double réseau de franges croisées d'un vélocimètre à franges bidimensionnel. L'étude théorique du rapport signal sur bruit conduit à une distance minimale d'approche de paroi de l'ordre de 1 mm, ce qui a été vérifié expérimentalement.

TRAITEMENT DU SIGNAL

Chaque fibre $10_{i,j}$ est couplé à un photomultiplicateur $20_{i,j}$ où i et j sont compris entre 1 et 10 (Fig. 4 et 5). Les signaux apparaissent sur les entrées des photomultiplicateurs en réponse au passage d'une particule sont dirigés individuellement vers les entrées d'amplificateurs à seuil 21 qui fournissent à leur sortie 22 des signaux logiques exempts de bruit.

Les signaux logiques d'une même colonne, c'est-à-dire à un "second" groupe de dix fiches optiques alignées parallèlement à la direction de la première coordonnée, l'ordonnée selon les Figs. 2 et 5, sont envoyés sur les entrées d'un opérateur logique sommateur 30 pour créer un signal de colonne (Fig. 5). Les dix signaux de colonne ainsi créés sont appliqués à l'entrée d'un codeur d'adresse 31 qui, en présence d'une impulsion sur l'une de ses entrées produit à sa sortie un code binaire représentatif de l'adresse de la colonne concernée par le passage d'une particule. La sortie du codeur 31 des singaux de colonne est reliée à une entrée de l'ordinateur 45. Les signaux logiques d'une même ligne, c'est-à-dire arrivés à un "premier" groupe de dix fibres optiques alignés parallèlement à la direction de la seconde coordonnée, l'abscisse selon les Figs. 2 et 5, sont envoyés sur les entrée d'un opérateur logique sommateur 40 pour créer un signal de ligne. Les dix signaux de ligne ainsi créés sont appliqués à l'entrée d'un codeur d'adresse 41 qui produit à sa sortie un code binaire représentatif de l'adresse de la ligne concernée par le passage de la même particule. La sortie du codeur 41 des signaux de ligne est reliée à une autre entrée de l'ordinateur 45.

Les codeurs 31, 41 délivrent, en même temps que le code binaire d'adresse, un signal de commande à un dispositif de synchronisation 43 qui déclenche une phase d'acquisition synchronisée des adresses de colonne et de ligne et déclenche le chronomètre 44 qui mesure la durée de passage d'une particule, par exemple d'une fibre à l'autre ou de la première à la dernière fibre rencontrées.

L'ordinateur 45 assure les fonctions d'acquisition, le stockage, de calcul de la vitesse et de la direction associées à chaque particule ainsi que les paramètres caractérisant la turbulence. En variante du traitement du signal, les photomultiplicateurs et leurs amplificateurs à seuil sont groupés non plus en colonnes et en lignes, mais selon tout schéma souhaité, comme par exemple selon les parallèles à 45° de la matrice décrite de manière à obtenir les coordonnées des fibres concernées par le passage d'une particule dans un autre système d'axes.

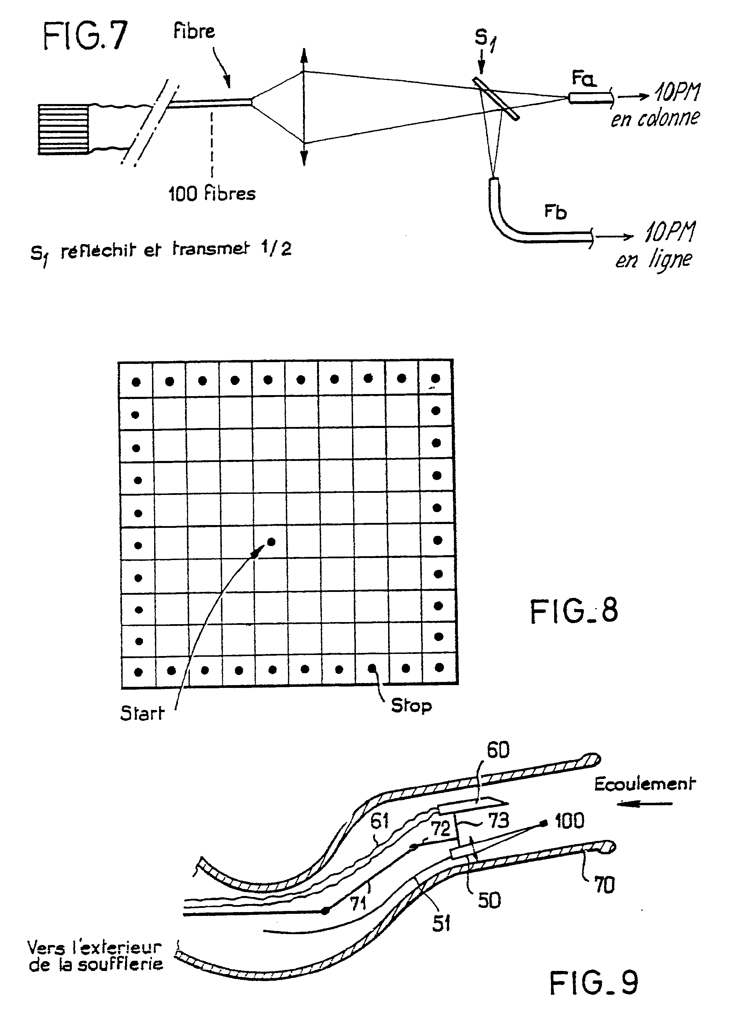

En se référant à la Fig. 6, les dix fibres optiques d'une même colonne sont reliées à un même photomultiplicateur 120 ; dans ce cas, le bruit de dix fibres est additionné sur un même photomultiplicateur, ce qui dégrade le rapport signal sur bruit. Par contre, pour une composante il suffit de dix photomultiplicateurs, pour deux composantes (horizontale, verticale) le nombre de photomultiplicateurs n'est plus que de 20 (au lieu de 100 précédemment), mais il faut opérer une séparation optique du signal en extrémité de chaque fibre comme indiqué dans la Fig. 7.

Le flux émis par chacune des cents fibres est séparé en deux parties égales vers deux fibres optiques $F_a$, $F_b$. Les fibres de type a sont regroupées en colonne, dit second groupe, vers dix seconds photomultiplicateurs comme dans la Fig. 6, et les fibres de type b sont regroupées de même mais en ligne dit premier groupe, vers dix premiers photomultiplicateurs (d'où les vingt photomultiplicateurs de cette version).

La Fig. 8 représente une mosaïque de fibres optiques en forme de matrice carrée et présentant une fibre centrale, ou un ensemble de fibres formant une barrière optique dont le signal transmis est un signal de start (début de comptage). La matrice présente également des fibres périphériques formant l'autre barrière optique pour la transmission d'un signal stop (fin de comptage). Cette barrière stop est sur une ligne fermée de configuration carrée, mais toute figure géométrique fermée peut être utilisée.

Dans cette configuration, une particule traversant toute la mosaïque déclenche d'abord un signal stop qui n'est pas pris en compte. Elle déclenche ensuite un signal start sur la fibre centrale et un signal stop sur une des fibres périphériques. Cette fibre périphérique permet de mesurer le module et l'orientation du vecteur vitesse avant créé ce couple start-stop.

On voit que ce montage présente un intérêt certain par rapport au vélocimètre classique 2 points, qui implique de faire tourner le montage pour modifier l'orientation de la droite joignant les 2 points et pouvoir déterminer la distribution angulaire des vecteurs vitesse en écoulement turbulent.

L'invention permet de constituer aussi un vélocimètre 2 points, soit en groupant les fibres, soit en sélectionnant 2 fibres de la mosaïque. L'orientation de la droite joignant les 2 points peut être aisément changée en choisissant une fibre start (ou un groupe de fibres) fixe et en changeant la fibre donnant le signal stop, ce changement s'opérant par sélection des signaux des photomultiplicateurs des fibres concernées.

En outre, l'invention permet de constituer un vélocimètre 2 traits en considérant les signaux des fibres de 2 colonnes, 2 lignes ou 2 diagonales.

L'invention s'applique aussi à la visualisation directe des écoulements. Dans ce cas, on perd l'information temporelle mais la trajectoire de la particule est mémorisée grâce à des moyens intégrant le flux lumineux dans le temps. Dans ce but, on peut relier les photomultiplicateurs à des diodes électroluminescentes disposées selon une mosaïque et formant écran de visualisation. On peut aussi relier les fibres de la matrice de fibres à un tube intensificateur d'image (par ex. à microcanaux) la sortie dudit tube étant alors observée par une mosaïque d'éléments à transfert de charge (CCD) ou par un enregistreur photographique ou vidéo.

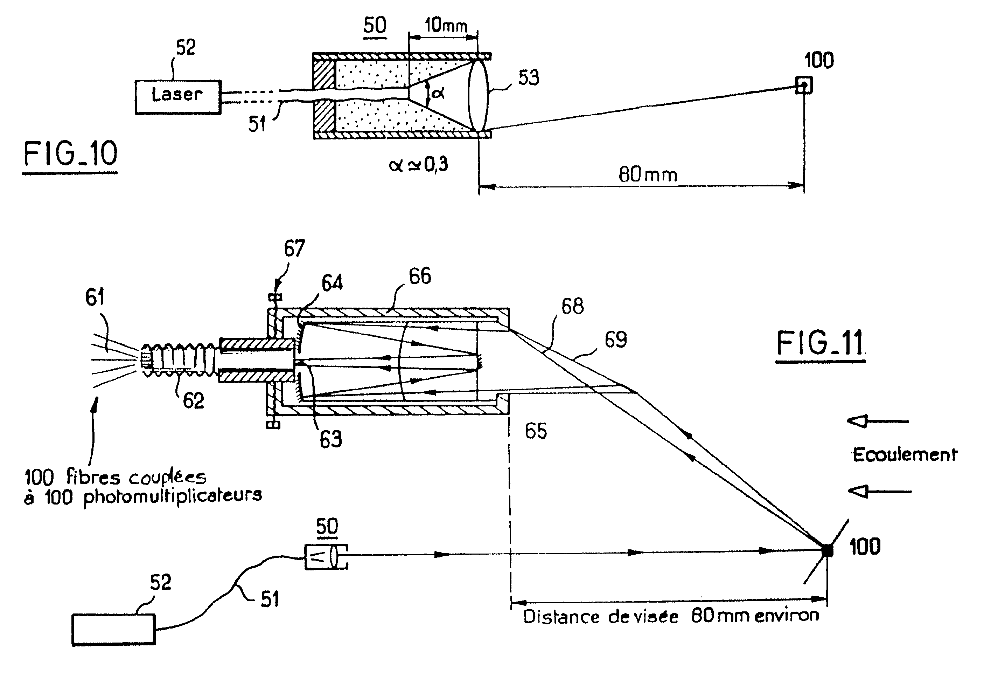

La Fig. 9 représente une réalisation d'un vélocimètre sous la forme d'une sonde destinée à la mesure dans l'écoulement d'une entrée d'air d'une installation propulsive. Le numéro de référence 70 désigne une manche à air dans laquelle n'est prévu aucun accès latéral optique. Le seul accès optique possible s'effectue par l'aval de la manche grâce à des fibres optiques 51 et 61. Dans cette manche à air est disposée une tige 71 formée de tronçons articulés. Le dernier tronçon en amont 72 comporte une monture 73 supportant une tête d'emission 50 et une tête de réception 60. Ces têtes vont être décrites en relation avec les Figs. 10 et 11 respectivement.

La tête optique d'emission 50 montrée à la Fig. 10 est reliée à un laser 52 à travers une fibre optique d'alimentation 51. Le faisceau divergeant émergeant de cette fibre optique est focalisé par l'objectif 53 sur le volume de mesure 100. A titre typique, la fibre optique 51 a un diamètre de coeur de 100 μm. L'ouverture du faisceau émergeant est de α ≃ 0,3rad. L'objectif 53 a une focale de 20 mm, et un diamètre de 10 mm. Le volume de mesure est à 80 mm de l'objectif et son diamètre approximatif est de 300 μm.

Sue la Fig. 11, 61 désigne un faisceau de 100 fibres optiques disposées sous la forme d'une mosaïque 10. Ces fibres sont prises dans une gaine 62 qui les tient assemblées. Le plan d'entrée 63 de la mosaïque 10 est appliqué sur la face arrière d'un miroir d'un téléscope de Cassegrain 64-65. Ce téléscope est fixé dans une monture tubulaire 66, le solidarisant avec la mosaïque de fibres. Les vis de serrage 67 permettent d'obtenir un ensemble monobloc formé du télescope de Cassegrain, qui est le système optique de réception du flux diffusé par les aérosols, et de la mosaïque de fibres.

Dans cet exemple, le télescope est constitué de deux blocs optiques 64 et 65 d'indice appropriés collés l'un sur l'autre et comportant à leur extrémité des surfaces réfléchissantes 64 et 65 formant respectivement les miroirs primaire et secondaire. Enfin, 68 désigne un prisme dont la face à réflexion totale 69 est collée sur la face du télescope portant le miroir secondaire 65.

A titre typique, le diamètre du télescope est de 20 mm, son grandissement de 10 et son ouverture de f/5. Ceci signifie que la face arrière de miroir primaire 64 est à environ 100 mm du volume de mesure.

La Fig. 11 détaille la tête d'émission 50 et celle de réception 60 qui sont portées par la monture 73 montrée sur la Fig. 9. En pratique, la tête d'émission 50 et la tête de réception 60 sont logées à l'intérieur d'un boîtier cylindrique supporté par la tige 72. On dispose ainsi d'une sonde "crayon" aisément manipulable.

Quel que soit son mode de réalisation, l'invention est utilisable hors de l'écoulement, d'une manière classique en visant le milieu fluide à travers un hublot.

## Revendications

1. Vélocimètre comprenant un volume de mesure (100) dans un écoulement fluide contenant des particules, des moyens (50) pour illuminer fortement ledit volume de mesure afin que de la lumière soit diffusée par lesdites particules sous l'effet de leur illumination, une mosaïque de fibres optiques (10), et au moins un système optique (101) pour projeter un plan ($P'_1$) du volume de mesure sur un plan d'entrée (P1) de ladite mosaïque, caractérisé en ce que des fibres optiques (10) de la mosaïque ont des extrémités d'entrée réparties suivant des directions de première et seconde coordonnées d'un plan d'entrée de sorte que la mosaïque présente des premiers groupes de fibres optiques ($10_{1,1}$-$10_{1,10}$ à $10_{10,1}$-$10_{10,10}$) alignées parallèlement à la direction de la première coordonnée et des seconds groupes de fibres optiques ($10_{1,1}$-$10_{10,1}$ à $10_{1,10}$-$10_{10,10}$) alignées parallèlement à la direction de la seconde coordonnée, et en ce que le vélocimètre comprend :

— des premiers et seconds moyens photomultiplicateurs-sommateurs (20-21-30 et 20-21-40 ; Fb-120-21 et Fa-120-21) recevant de la lumière diffusée respectivement à travers les premiers et seconds groupes de fibres optiques pour fournir des premières impulsions électriques relatives à la première coordonnée de la vitesse des particules et des secondes impulsions électriques relatives à la seconde coordonnée de la vitesse des particules, et

— des moyens (31, 41, 45) pour calculer deux composantes de ladite vitesse à partir des premières et secondes impulsions électriques.

2. Vélocimètre conforme à la revendication 1, caractérisé en ce que chacun des premiers et seconds moyens photomultiplicateurs-sommateurs comprend des photomultiplicateurs (20) couplés respectivement aux extrémités de sortie des fibres optiques du groupe associé audit moyen photomultiplicateurs-sommateurs, des amplificateurs à seuil (21) reliés respectivement aux photomultiplicateurs, et un opérateur logique sommateur (30 ; 40) pour additionner des impulsions aux sorties des amplificateurs, afin qu'un codeur (31 ; 41) dans les moyens pour calculer (31, 41, 45) fournisse une adresse de coordonnée de vitesse.

3. Vélocimètre conforme à la revendication 1, caractérisé en ce que chacun des premiers et seconds moyens photomultiplicateurs-sommateurs comprend plusieurs fibres optiques intermédiaires (Fa, Fb) respectivement couplées par des séparateurs optiques ($S_1$) aux extrémités de sortie des fibres optiques du groupe associé audit moyen photomultiplicateurs-sommateurs, chaque moyen séparateur séparant la lumière sortant d'une fibre de groupe en deux parties égales vers deux fibres intermédiaires associées à des premiers et seconds moyens photomultiplicateurs-sommateurs respectifs, un photomultiplicateur (120) sommant la lumière transmise par les fibres intermédiaires (Fa, Fb), et un amplificateur à seuil (21) relié au photomultiplicateur et appliquant une impulsion à un codeur (31 ; 41) dans les moyens pour calculer (31, 41, 45) pour fournir une adresse de coordonnée de vitesse.

4. Vélocimètre conforme à l'une quelconque des revendications 1 à 3, caractérisé en ce qu'il comprend une autre mosaïque de fibres optiques (10') dont le plan d'entrée ($P_2$) est la projection d'un autre plan du volume de mesure à travers un autre système optique (102) et qui est couplée à d'autres moyens photomultiplicateurs-sommateurs, afin que les moyens pour calculer calculent au moins une autre composante de ladite vitesse.

5. Vélocimètre conforme à l'une quelconque des revendications 1 à 4, caractérisé en ce que le système optique (101) est un téléscope de Cassegrain (80) et que la mosaïque de fibres optiques est placée derrière l'ouverture du miroir primaire (65) de ce télescope.

6. Vélocimètre conforme à l'une quelconque des revendications 1 à 5, notamment destiné à mesurer la vitesse d'un écoulement fluide dans un conduit d'entrée d'air (70), caractérisé en ce qu'il comprend une tige formée de tronçons (71, 72) articulés à l'intérieur dudit conduit (70) et suivant substantiellement son profil longitudinal ; un support (73) porté par ladite tige et supportant le système optique (60) et la mosaïque de fibres (10) ; en tant que moyens pour illuminer, une source laser (50), montée sur ledit support, alimentée par une fibre optique (51) intérieure au conduit et connectée à un laser (52) extérieur, les fibres optiques formant un faisceau (61) à la sortie de la mosaïque passant à l'intérieur du conduit d'entrée d'air et aboutissant aux moyens photomultiplicateurs-sommateurs.

## Patentansprüche

1. Drehzahlmesser, umfassend ein Meßvolumen (100) in einer Partikel enthaltenden Fluidströmung, Mittel (50) zur starken Beleuchtung des Meßvolumens, damit das Licht durch die Partikel unter der Wirkung ihrer Beleuchtung gestreut wird, ein Mosaik von Lichtleitfasern (10) und wenigstens ein optisches System (101) zum Projizieren einer Ebene ($P'_1$) des Meßvolumens auf eine Eintrittsebene (P1) des Mosaiks, dadurch **gekennzeichnet,** daß
— Lichtleitfasern (10) des Mosaiks Eintrittsenden aufweisen, die gemäß Richtungen erster und zweiter Koordinaten einer Eintrittsebene verteilt sind derart, daß das Mosaik erste Gruppen von Lichtleitfasern ($10_{1,1}$-$10_{1,10}$ bis $10_{10,1}$-$10_{10,10}$), die parallel zur Richtung der ersten Koordinate ausgerichtet sind, und zweite Gruppen von Lichtleitfasern ($10_{1,1}$-$10_{10,1}$ bis $10_{1,10}$-$10_{10,10}$) aufweist, die parallel zur Richtung der zweiten Koordinate ausgerichtet sind, und daß der Geschwindigkeitsmesser umfaßt :
— erste und zweite Photomultiplier-Summierer-Mittel (20-21-30 und 20-21-40 ; Fb-120-21 und Fa-120-21), die das jeweils durch die ersten und zweiten Gruppen von Lichtleitfasern gestreute Licht aufnehmen, um erste elektrische Impulse bezüglich der ersten Koordinate der Geschwindigkeit der Partikel und zweite elektrische Impulse bezüglich der zweiten Koordinate der Geschwindigkeit der Partikel zu liefern,
— Mittel (31, 41, 45) zum Berechnen von zwei Komponenten der Geschwindigkeit ausgehend von den ersten und zweiten elektrischen Impulsen.

2. Geschwindigkeitsmesser nach Anspruch 1, dadurch **gekennzeichnet,** daß die ersten und zweiten Photomultiplier-Summierer-Mittel jeweils Photomultiplier (20), die jeweils mit den Austrittsenden der Lichtleitfasern der dem Photomultiplier-Summierer-Mittel zugeordneten Gruppe gekoppelt sind, jeweils mit den Photomultipliern verbundene Schwellwertverstärker (21) und einen logischen Summier-Operator (30 ; 40) zum Addieren der Impulse auf den Ausgängen der Verstärker umfassen, damit eine Codiereinrichtung (31 ; 41) in den Mitteln zum Berechnen (31, 41, 45) eine Geschwindigkeitskoordinatenadresse liefert.

3. Geschwindigkeitsmesser nach Anspruch 1, dadurch **gekennzeichnet,** daß die ersten und zweiten Photomultiplier-Summierer-Mittel jeweils mehrere Zwischenlichtleitfasern (Fa, Fb), die jeweils durch optische Trennvorrichtungen ($S_1$) mit den Austrittsenden der Lichtleitfasern der dem Photomultiplier-Summierer-Mittel zugeordneten Gruppe gekoppelt sind, wobei jedes Trennmittel das aus einer Gruppenfaser austretende Licht in zwei gleiche Teile zu zwei den entsprechenden ersten und zweiten Photomultiplier-Summierer-Mitteln zugeordneten Zwischenfasern teilt, einen das durch die Zwischenfasern (Fa, Fb) übertragene Licht summierenden Photomultiplier (120) und einen Schwellwertverstärker (21) umfassen, der mit dem Photomultiplier verbunden ist und einen Impuls auf eine Codiereinrichtung (31 ; 41) in den Mitteln zum Berechnen (31, 41, 45) gibt, um eine Geschwindigkeitskoordinatenadresse zu liefern.

4. Geschwindigkeitsmesser nach einem beliebigen der Ansprüche 1 bis 3, dadurch **gekennzeichnet,** daß er ein weiteres Mosaik von Lichtleitfasern (10') umfaßt, dessen Eintrittsebene ($P_2$) die Projektion einer weiteren Ebene des Meßvolumens durch ein weiteres optisches System (102) ist und das mit weiteren Photomultiplier-Summierer-Mittel gekoppelt ist, damit die Mittel zum Berechnen wenigstens eine weitere Komponente der Geschwindigkeit berechnen.

5. Geschwindigkeitsmesser nach einem beliebigen der Ansprüche 1 bis 4, dadurch **gekennzeichnet,** daß das optische System (101) ein Cassegrain-Teleskop (80) ist und daß das Mosaik von Lichtleitfasern hinter der Öffnung des Primärspiegels (65) dieses Teleskops angeordnet ist.

6. Geschwindigkeitsmesser nach einem beliebigen der Ansprüche 1 bis 5, insbesondere bestimmt zum Messen der Geschwindigkeit einer Fluidströmung in einer Lufteinlaßleitung (70), dadurch **gekennzeichnet,** daß er eine Stange, die mit Teilabschnitten (71, 72) gebildet ist, die im Inneren der Leitung (70) gelenkig angeordnet sind und im wesentlichen deren Längsprofil folgen ; eine Trägereinrichtung (73), die von der Stange getragen ist und das optische System (60) und das Mosaik von Fasern (10) trägt ; als Mittel zum Beleuchten eine Laserquelle (50) umfaßt, die auf der Trägereinrichtung angebracht, durch eine Lichtleitfaser (51) im Inneren der Leitung versorgt und mit einem äußeren Laser (52) verbunden ist, wobei die Lichtleitfasern ein Faserbündel (61) am Austritt des Mosaiks bilden, das im Inneren der Lufteinlaßleitung hindurch verläuft und an die Photomultiplier-Summierer-Mittel anstößt.

## Claims

1. Velocimeter comprising a measurement volume (100) in a fluid flow containing particles, means (50) for strongly illuminating said measurement volume so that light be diffused by said particles in response to their illumination, an optical fiber mosaic (10), and at least an optical system (101) for projecting a plane ($P'_1$) in the measurement volume onto an input plane (P1) of said mosaic, characterized in that optical fibers (10) of the mosaic have input ends distributed along directions of first and second coordinates of an input plane in order that the mosaic presents first optical fiber groups ($10_{1,1}$-$10_{1,10}$ to $10_{10,1}$-$10_{10,10}$) aligned parallel to the direction of the first coordinate, and second optical fiber groups ($10_{1,1}$-$10_{10,1}$ to $10_{1,10}$-$10_{10,10}$) aligned parallel to the direction of the second coordinate, and in that the velocimeter comprises :
   — first and second photomultiplier-adder means (20-21-30 and 20-21-40 ; Fb-120-21 and Fa-120-21) receiving light diffused through the first and second optical fiber groups for providing first electrical pulses relative to the first coordinate of the velocity of the particules and second electrical pulses relative to the second coordinate of the velocity of the particules, respectively, and
   — means (31, 41, 45) for calculating two components of said velocity from first and second electrical pulses.

2. Velocimeter according to claim 1, characterized in that each of the first and second photomultiplier-adder means comprises photomultipliers (20) coupled to the optical fiber output ends of the group associated to said photomultiplier-adder means respectively, threshold amplifiers (21) connected to the photomultipliers respectively, and an adder logic operator (30 ; 40) for adding pulses to the outputs of the amplifiers, in order that a coder (31 ; 41) included in the calculating means (31, 41, 45) provides a velocity coordinate address.

3. Velocimeter according to claim 1, characterized in that each of the first and second photomultiplier-adder means comprises plural intermediate optical fibers (Fa, Fb) coupled by means of beam splitters (S1) to the optical fiber output ends of the group associated to said photomultiplier-adder means respectively, each splitter means splitting light outgoing from a group fiber into two equal parts to two intermediate optical fibers associated with respective first and second photomultiplier-adder means, a photomultiplier (120) adding light transmitted by the intermediate fibers (Fa, Fb), and a threshold amplifier (21) connected to the photomultiplier and applying a pulse to a coder (31 ; 41) in calculating means (31, 41, 45) for providing a velocity coordinate address.

4. Velocimeter according to any one of claims 1 to 3, characterized in that it comprises another optical fiber mosaic (10') of which the input plane (P2) is the projection of another measurement volume plane through another optical system (102) and which is coupled to another photomultiplier-adder means, in order that the calculting means calculate at least one other component of said velocity.

5. Velocimeter according to any one of claims 1 to 4, characterized in that the optical system (101) is a Cassegrain telescope (80) and that the optical fiber mosaic is located behind the opening of the primary mirror (65) of this telescope.

6. Velocimeter according to any one of claims 1 to 5, notably intented for measuring the velocity of a fluid flow into an air input pipe (70), characterized in that it comprises a rod formed of sections (71, 72) articulated inside said pipe (70) and substantially following its longitudinal profile ; a support (73) borne by said rod and supporting the optical system (60) and the fiber mosaic (10) ; as illuminating means, a laser source (50), mounted on said support, supplied by an optical fiber (51) internal to the pipe and connected to an external laser (52), the optical fibers forming a beam (61) at the output of the mosaic running in the air input pipe and leading to the photomultiplier-adder means.

FIG_1

FIG_2

FIG_3

**FIG.4**

$10_{10,10}$  $20_{10,10}$  $21_{10,10}$  $22_{10,10}$

$20_{1,1}$  $10_{1,1}$

100 Fibres repérées

$21_{1,1}$  $22_{1,1}$

100 photomultiplicateurs

**FIG.5**

$21_{10,10}$

40  1 signal ligne  41  CODEUR D'ADRESSE  adresse ligne

40

30  30  30

1 signal colonne  $22_{1,1}$

CODEUR D'ADRESSE

31

44  CHRONOMETRE

43  SYNCHRO

adresse colonne

45  ORDINATEUR

**FIG.6**

10 fibres d'une même colonne

120  21  31

PM1  S  CODEUR D'ADRESSE

PM2  S  Vers 45

PM10  S

120  21

# FIG.7

Fibre

100 fibres

S₁

Fa

10PM
en colonne

Fb

10PM
en ligne

S₁ réfléchit et transmet 1/2

# FIG.8

Start

Stop

# FIG.9

60

Ecoulement

61

72

73

100

71

50

51

70

Vers l'exterieur
de la soufflerie

FIG_10

$\alpha \simeq 0,3$

FIG_11

100 fibres couplées
à 100 photomultiplicateurs

Ecoulement

Distance de visée 80mm environ

EP 0 277 877 B1